# FASCICULE DE BREVET EUROPEEN

(11) **EP 2 000 636 B1**
(45) Date de publication et mention de la délivrance du brevet: **09.12.2009**
(21) Numéro de dépôt: 08157012.9
(22) Date de dépôt: 27.05.2008
(51) Int. Cl.: F01M 13/04, F02B 37/007, F02M 25/06, F02M 35/10

(54) **Raccord d'admission d'air pour un moteur diesel bi-turbo et moteur diesel comportant un tel raccord**
Luftansaugstutzen für einen Biturbo-Dieselmotor und mit einem solchen Stutzen ausgestatteter Dieselmotor
Air intake fitment for a bi-turbo diesel engine and diesel engine comprising such a fitment

(30) Priorité: 05.06.2007 FR 0755488
(43) Date de publication de la demande: 10.12.2008
(73) Titulaire: Peugeot Citroën Automobiles Société Anonyme, 78140 Velizy Villacoublay (FR)
(72) Inventeur: Dore, Martial, 78000 Versailles (FR)
(74) Mandataire: Ménès, Catherine

(56) Documents cités:
- EP-A- 1 447 533
- DE-C1- 19 627 412
- FR-A- 2 885 649

## Description

La présente invention concerne un raccord d'admission d'air pour un moteur à allumage par compression, ou moteur « diesel ».

L'invention trouve une application particulièrement avantageuse dans le domaine du recyclage des gaz de carter dans les moteurs diesel équipés de deux turbocompresseurs.

Certaines motorisations diesel utilisent deux turbocompresseurs fonctionnant séquentiellement, c'est-à-dire qu'un premier turbocompresseur tourne en permanence quel que soit le régime-moteur, alors que le second turbocompresseur n'est connecté qu'au-delà d'un régime donné.

Ce fonctionnement en recouvrement des deux turbocompresseurs permet d'améliorer sensiblement les prestations du véhicule en offrant une suralimentation optimale sur une large plage de régime-moteur.

En pratique, le premier turbocompresseur est actionné seul à bas régime. Aux alentours de 3 000 tours/min, l'ouverture d'une vanne permet le transfert des gaz d'échappement au niveau de l'entrée de la turbine du second turbocompresseur, mettant ce dernier en action. De son côté, le premier turbocompresseur continuant de tourner, le second turbocompresseur vient alors compléter le premier, augmentant ainsi la pression d'air admis dans chacun des cylindres.

La distribution de l'air d'admission entre les deux turbocompresseurs est réalisée par un raccord comprenant un orifice d'entrée prévu pour recevoir de l'air provenant d'un conduit d'admission unique, commun aux deux turbocompresseurs. L'air entrant dans le raccord est réparti entre deux orifices de sortie, chacun de ces orifices de sortie étant relié à un conduit d'alimentation en air d'un des turbocompresseurs.

Par ailleurs, dans les moteurs à combustion interne, des gaz de carter, appelés aussi gaz de « blow-by », sont générés dans la chambre de combustion au niveau de chacun des cylindres et se propagent à l'intérieur du compartiment vilebrequin par migration autour des segments, pour se répandre dans la totalité du moteur.

Ces gaz de carter sont constitués de gaz de combustion, de gaz imbrûlés et d'huile. Ils contiennent notamment du dioxyde de carbone et du diazote.

Aussi, afin d'éviter les risques de fuite vers l'extérieur et le rejet dans l'atmosphère de ces gaz polluants, les gaz de carter doivent absolument être évacués.

C'est pourquoi il est prévu dans les moteurs thermiques des circuits de récupération des gaz de carter en boucle fermée fonctionnant par aspiration vers l'admission d'air en dépression, voir par exemple DE 196 27 412 C1.

Cependant, avant d'être brûlés, les gaz de «blow-by» doivent être débarrassés de l'huile qu'ils contiennent en passant à travers une chambre de décantation, ceci pour des raisons d'encrassement et de pollution.

Après décantation, les gaz de « blow-by » sont acheminés à l'admission à travers un orifice d'injection débouchant dans le raccord d'admission.

II peut se produire toutefois qu'une faible quantité d'huile reste présente dans les gaz de «blow-by» lorsqu'ils sont injectés dans le raccord d'admission. Or, dans ce cas, il faut absolument éviter que de l'huile résiduelle ne s'accumule à l'entrée du second turbocompresseur lorsqu'il est hors fonctionnement, c'est-à-dire aux bas régimes du moteur alors que le premier turbocompresseur est actif. En effet, pour un bon fonctionnement du moteur, il est impératif que l'huile restant dans les gaz de carter puisse circuler de manière continue à l'admission afin de ne pas former une masse stagnante importante qui serait injectée brusquement au compresseur du deuxième turbocompresseur lors de sa mise en route.

Dans une configuration où le second orifice de sortie est situé en amont du premier par rapport à la direction de circulation de l'air admis, une solution connue pour résoudre cette difficulté consiste à placer l'orifice d'injection des gaz de carter en aval du second orifice de sortie vers le compresseur du second turbocompresseur et en amont du premier orifice de sortie vers le compresseur du premier turbocompresseur. De cette manière, l'huile résiduelle des gaz de carter est réintroduite directement dans le moteur par le premier turbocompresseur.

Toutefois, cette contrainte quant au positionnement de l'orifice d'injection des gaz de carter peut conduire à un allongement sensible du circuit de « blow-by » et pénaliser sévèrement le volume alloué à d'autres fonctions du moteur, telle que la fonction de récupération des gaz d'échappement EGR (« Exhaust Gas Recovery »).

Aussi, un but de l'invention est de proposer un raccord d'admission qui permettrait d'assurer en toutes circonstances l'évacuation directe vers le compresseur du premier turbocompresseur de la quantité d'huile restant dans les gaz de carter à l'admission.

Ce but est atteint, conformément à l'invention, grâce à un raccord d'admission d'air pour un moteur à allumage par compression, ledit moteur étant suralimenté au moyen d'un premier turbocompresseur fonctionnant à tout régime-moteur et d'un second turbocompresseur fonctionnant au-delà d'un régime-moteur donné, ledit raccord d'admission comprenant :
- un orifice d'entrée destinée à être raccordé à un conduit d'admission d'air commun aux turbocompresseurs,
- un premier et un deuxième orifices de sortie destinés à être raccordés respectivement à un premier conduit d'alimentation en air du premier turbocompresseur et à un second conduit d'alimentation en air du second turbocompresseur,
- un orifice d'injection de gaz de carter,
remarquable en ce que ledit raccord d'admission comporte en outre un moyen de déflection d'huile de gaz de carter depuis ledit orifice d'injection jusqu'au premier orifice de sortie.

Ainsi, on comprend qu'avec le raccord d'admission conforme à l'invention, il est possible d'entraîner l'huile résiduelle des gaz de carter directement vers le conduit d'alimentation du premier turbocompresseur en évitant le second orifice de sortie vers le conduit d'alimentation du second turbocompresseur, et ceci quelle que soit la position dudit second orifice de sortie, en particulier en amont du premier orifice de sortie.

En conséquence, il est prévu par l'invention que ledit orifice d'injection de gaz de carter est disposé en amont desdits orifices de sortie du raccord. Cette configuration, exclue dans l'art antérieur, est rendue possible par l'invention du fait de la présence du moyen de déflection introduit dans le raccord d'admission. L'injection des gaz peut être ainsi déporté vers l'orifice d'entrée du raccord d'admission de manière à libérer de l'espace pour d'autres fonctions moteur, comme les interfaces d'alimentation en eau d'un échangeur EGR.

De préférence, ledit orifice d'injection des gaz de carter est situé en partie supérieure dudit raccord, ce qui permet d'obtenir que l'huile résiduelle s'écoule naturellement par gravitation vers l'entrée du compresseur du premier turbocompresseur, lequel fonctionne en permanence.

Enfin, il faut souligner un autre avantage de l'invention qui réside dans le fait que les moyens de déflection du raccord d'admission empêchent également l'huile des gaz de carter de s'accumuler à la sortie du conduit de recirculation de l'air provenant du compresseur du deuxième turbocompresseur du fait de l'inertie de ce dernier lorsqu'il est mis hors fonctionnement.

La description qui va suivre en regard des dessins annexés, donnés à titre d'exemples non limitatifs, fera bien comprendre en quoi consiste l'invention et comment elle peut être réalisée.

La figure 1 est une vue d'ensemble d'un moteur diesel à deux turbocompresseurs comportant un raccord d'admission conforme à l'invention.

La figure 2a est une vue en perspective du raccord de la figure 1.

La figure 2b est une vue en coupe selon la ligne A-A du raccord de la figure 2a.

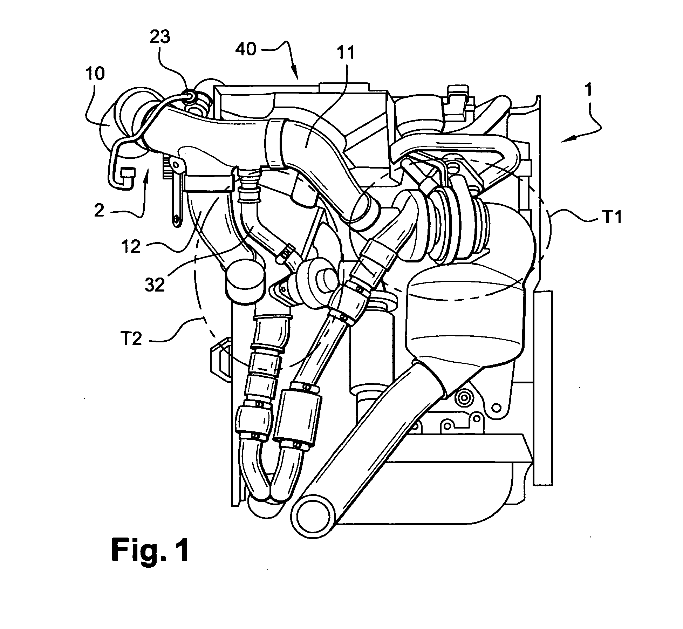

Sur la figure 1 est représenté un moteur 1 à allumage par compression, ou moteur « diesel », suralimenté au moyen de deux turbocompresseurs T1 et T2. Le premier turbocompresseur T1 fonctionne à tous les régimes-moteur. II est le seul actionné à bas régime. A partir d'un régime donné, de 3 000 tours/min par exemple, le second turbocompresseur T2 est mis en route et vient ajouter son effet de suralimentation à celui du premier, lequel est toujours maintenu en action.

Les compresseurs des turbocompresseurs T1 et T2 sont alimentés en air à travers des conduits d'alimentation respectivement référencés 11 et 12.

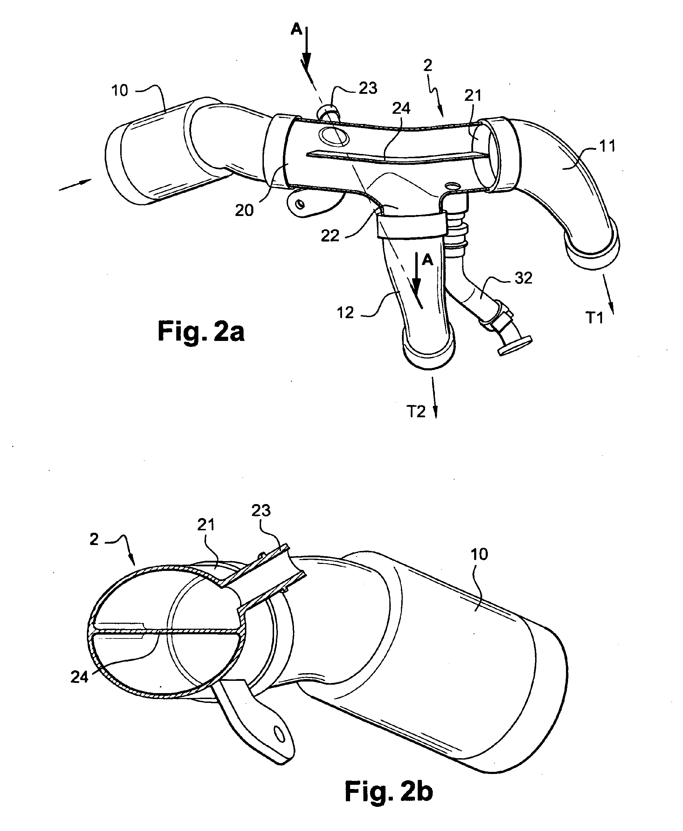

Comme le montre plus particulièrement la figure 2a, la répartition de l'air d'admission entre les deux turbocompresseurs est réalisée par l'intermédiaire d'un raccord 2 d'admission comportant un orifice 20 d'entrée relié à un conduit 10 d'admission d'air en dépression, commun aux deux turbocompresseurs T1 et T2. Le raccord 2 dirige l'air ainsi admis vers les conduits 11 et 12 d'alimentation à travers respectivement des orifices 21 et 22 de sortie du raccord.

Sur les figures 1 et 2a est également représenté un conduit 32 de recirculation d'air débouchant dans le raccord 2 à proximité de l'orifice 21 de sortie relié au conduit 11 d'alimentation du premier turbocompresseur T1. Ce conduit 32 de recirculation est chargé de réintroduire à l'admission l'air produit par le compresseur du second turbocompresseur T2 par effet d'inertie lors de sa mise hors fonctionnement.

D'autre part, les gaz de carter produits par le moteur 1 sont réaspirés à l'admission et injectés dans le raccord 2 d'admission à travers un orifice 23 d'injection.

On peut voir sur les figures 1 et 2a que l'orifice 23 d'injection des gaz de « blow-by » est disposé en amont des orifices 21 et 22 de sortie du raccord. Cette disposition présente l'avantage de dégager un volume 40 dans lequel il est possible d'installer des fonctions de récupération des gaz d'échappement (EGR) telles que les interfaces d'alimentation en eau d'un échangeur EGR, comme mentionné plus haut.

Afin d'éviter que de l'huile encore contenue dans les gaz de carter, malgré leur passage dans une chambre de décantation (non représentée), ne vienne s'accumuler aussi bien à l'entrée du conduit 12 d'alimentation en air du compresseur du second turbocompresseur T2 qu'au débouché du conduit 32 de recirculation lorsque ledit second turbocompresseur ne fonctionne pas, le raccord 2 d'admission des figures 2a et 2b comporte un moyen 24 de déflection de l'huile de gaz de carter depuis l'orifice 23 d'injection jusqu'à l'orifice 21 de sortie. L'huile résiduelle est alors transférée directement de l'orifice 23 d'injection au conduit 11 d'alimentation en air où elle est aspirée par le compresseur du premier turbocompresseur T1 sans lui laisser la possibilité de se déposer au niveau des conduits 12 et 32.

Le déflecteur 24 peut se présenter sous la forme d'une toile ou d'une paroi pleine, séparant le raccord 2 en deux parties de section équivalente.

Enfin, les figures 2a et 2b montrent une disposition particulièrement avantageuse dans laquelle l'injection des gaz de « blow-by » est effectuée en partie supérieure du raccord 2, de telle sorte que l'huile restante s'écoule naturellement vers l'entrée du conduit 11 d'alimentation du premier turbocompresseur T1, toujours en fonctionnement.

## Revendications

1. Raccord (2) d'admission d'air pour un moteur (1) à allumage par compression, ledit moteur étant suralimenté au moyen d'un premier turbocompresseur (T1) fonctionnant à tout régime-moteur et d'un second turbocompresseur (T2) fonctionnant au-delà d'un régime-moteur donné, ledit raccord (2) d'admission comprenant :
- un orifice (20) d'entrée destinée à être raccordé à un conduit (10) d'admission d'air commun aux turbocompresseurs,
- un premier (21) et un deuxième (22) orifices de sortie destinés à être raccordés respectivement à un premier conduit (11) d'alimentation en air du premier turbocompresseur (T1) et à un second conduit (12) d'alimentation en air du second turbocompresseur (T2),
- un orifice (23) d'injection de gaz de carter,
**caractérisé en ce que** ledit raccord (2) d'admission comporte en outre un moyen (24) de déflection d'huile de gaz de carter depuis ledit orifice (23) d'injection jusqu'au premier orifice (21) de sortie.

2. Raccord selon la revendication 1, dans lequel ledit orifice (23) d'injection de gaz de carter est disposé en amont desdits orifices (21, 22) de sortie du raccord (2).

3. Raccord selon l'une des revendications 1 ou 2, dans lequel ledit moyen (24) de déflection a la forme d'une toile.

4. Raccord selon l'une des revendications 1 ou 2, dans lequel ledit moyen (24) de déflection a la forme d'une paroi.

5. Raccord selon l'une quelconque des revendications 1 à 4, dans lequel ledit orifice (23) d'injection des gaz de carter est situé en partie supérieure dudit raccord (2).

6. Moteur Diesel dont le circuit d'admission comporte deux compresseurs de suralimentation faisant partie d'un premier turbocompresseur (T1) fonctionnant à tout régime-moteur et d'un second turbocompresseur (T2) fonctionnant au-delà d'un régime-moteur donné, **caractérisé en ce qu'**il comporte un raccord selon l'une quelconque des revendications 1 à 5.

## Claims

1. Air intake fitment for (2) for a compression-ignition engine (1), the said engine being supercharged by at least a first turbocharger (T1) operating at all engine speeds and by a second turbocharger (T2) operating beyond a given engine speed, the said intake fitment (2) comprising:
- an inlet orifice (20) intended to be coupled to an air intake duct (10), common to both turbochargers
- a first outlet orifice (21) and a second outlet orifice (22) which orifices are intended to be coupled respectively to a first air supply duct (11) of the first turbocharger (T1) and to a second air supply duct (12) of the second turbocharger (T2),
- a blowby injection orifice (23),
**characterized in that** the said intake fitment (2) further comprises a means (24) of deflecting blowby oil from the said injection orifice (23) to the first outlet orifice (21).

2. Fitment according to Claim 1, in which the said blowby injection orifice (23) is positioned upstream of the said outlet orifices (21, 22) of the fitment (2).

3. Fitment according to one of Claims 1 and 2, in which the said deflection means (24) is in the form of a mesh screen.

4. Fitment according to one of Claims 1 and 2, in which the said deflection means (24) is in the form of a wall.

5. Fitment according to any one of Claims 1 to 4, in which the said blowby injection orifice (23) is situated in the upper part of the said fitment (2).

6. Diesel engine the intake circuit of which comprises two supercharging compressors forming part of a first turbocharger (T1) that operates at all engine speeds and of a second turbocharger (T2) that operates beyond a given engine speed, **characterized in that** it comprises a fitment according to any one of Claims 1 to 5.

## Patentansprüche

1. Luftansaugstutzen (2) für einen Dieselmotor (1), wobei der Motor mittels eines ersten Turboladers (T1), der bei jeder Motordrehzahl arbeitet, und eines zweiten Turboladers (T2) aufgeladen wird, der jenseits einer gegebenen Motordrehzahl arbeitet, wobei der Ansaugstutzen (2) enthält:
- eine Eingangsöffnung (20), die dazu bestimmt ist, an einen den Turboladern gemeinsame Luftansaugkanal (10) angeschlossen zu werden,
- eine erste (21) und eine zweite (22) Ausgangsöffnung, die dazu bestimmt sind, an einen ersten Luftzufuhrkanal (11) des ersten Turboladers (T1) bzw. an einen zweiten Luftzufuhrkanal (12) des zweiten Turboladers (T2) angeschlossen zu werden,
- eine Blow-by-Gas-Einspritzöffnung (23),
**dadurch gekennzeichnet, dass** der Ansaugstutzen (2) außerdem eine Ablenkeinrichtung (24) für im Blow-by-Gas enthaltenes Öl von der Einspritzöffnung (23) bis zur ersten Ausgangsöffnung (21) aufweist.

2. Stutzen nach Anspruch 1, **dadurch gekennzeichnet, dass** die Blow-by-Gas-Einspritzöffnung (23) vor den Ausgangsöffnungen (21, 22) des Stutzens (2) angeordnet ist.

3. Stutzen nach einem der Ansprüche 1 oder 2, bei dem die Ablenkeinrichtung (24) die Form einer Einlage hat.

4. Stutzen nach einem der Ansprüche 1 oder 2, bei dem die Ablenkeinrichtung (24) die Form einer Wand hat.

5. Stutzen nach einem der Ansprüche 1 bis 4, bei dem die Blow-by-Gas-Einspritzöffnung (23) sich im oberen Bereich des Stutzens (2) befindet.

6. Dieselmotor, dessen Saugtrakt zwei Auflader aufweist, die Teil eines ersten Turboladers (T1), der bei jeder Motordrehzahl arbeitet, und eines zweiten Turboladers (T2) sind, der jenseits einer gegebenen Motordrehzahl arbeitet, **dadurch gekennzeichnet, dass** er einen Stutzen nach einem der Ansprüche 1 bis 5 aufweist.
